# EUROPÄISCHE PATENTSCHRIFT

(11) **EP 3 092 371 B1**
(45) Veröffentlichungstag und Bekanntmachung des Hinweises auf die Patenterteilung: **13.12.2017**
(21) Anmeldenummer: 15741869.0
(22) Anmeldetag: 31.03.2015
(51) Int. Cl.: F01D 5/02, F01D 5/06, F16D 1/08, F04D 29/26

(54) **ROTOR MIT AXIAL GESICHERTEM STÜTZRING**
ROTOR WITH AXIALLY SECURED SUPPORT RING
ROTOR DOTÉ D'UNE BAGUE D'APPUI BLOQUÉE AXIALEMENT

(30) Priorität: 15.04.2014 EP 14164716
(43) Veröffentlichungstag der Anmeldung: 16.11.2016
(73) Patentinhaber: Siemens Aktiengesellschaft, 80333 München (DE)
(72) Erfinder: KOLK, Karsten, 45479 Mülheim a.d. Ruhr (DE); SCHRÖDER, Peter, 45327 Essen (DE); VEITSMAN, Vyacheslav, 45879 Gelsenkirchen (DE)
(86) Internationale Anmeldenummer: PCT/EP2015/056959
(87) Internationale Veröffentlichungsnummer: WO 2015/158541

(56) Entgegenhaltungen:
- DE-B1- 2 643 886
- DE-C- 594 484

## Beschreibung

Die vorliegende Erfindung betrifft einen Rotor, insbesondere einen Gasturbinenläufer, mit mehreren jeweils eine axiale Durchgangsöffnung aufweisenden Rotorscheiben, die über zumindest einen sich durch die Durchgangsöffnungen erstreckenden Zuganker axial verspannt und zu zumindest einer Rotorscheibeneinheit zusammengefasst sind, wobei am Außendurchmesser des Zugankers zumindest ein Stützring anliegt, der mit einer der Rotorscheiben in Eingriff ist und über den sich der Zuganker an der Rotorscheibe abstützt, und wobei zur axialen Sicherung des zumindest einen Stützrings wenigstens ein Sicherungselement vorgesehen ist.

Derartige Rotoren, die aus einer Vielzahl einzelner Rotorscheiben unter Bildung einer oder mehrerer Rotorscheibeneinheiten zusammengesetzt sind, sind im Stand der Technik in unterschiedlichsten Ausgestaltungen bekannt. Die Rotorscheiben jeder Rotorscheibeneinheit werden über den Zuganker flächig aneinander gepresst, wobei die Presskraft normalerweise durch endseitig auf den Zuganker aufgeschraubte Schraubenmuttern erzeugt wird. Meist werden unmittelbar benachbart angeordnete Rotorscheiben zusätzlich über einen Formschluss miteinander verbunden und zentriert. Ein solcher Formschluss kann beispielsweise über eine sogenannte Hirth-Verzahnung gebildet werden.

Während des Betriebs des Rotors ist dieser Schwingungen ausgesetzt, deren Frequenz unter anderem von der freischwingenden Länge des Zugankers abhängig ist. Mit zunehmender Baulänge eines Rotors nimmt auch die freischwingende Länge des Zugankers zu, was dazu führt, dass sich dessen Eigenfrequenz auf ein niedrigeres Niveau nahe der Rotationsfrequenz des Rotors verschiebt. Eine solche Frequenzverschiebung kann unzulässig hohe Schwingungsamplituden nach sich ziehen, welche die Funktion des Rotors beeinträchtigen und zu Schäden führen können.

Zur Verringerung der freischwingenden Länge des Zugankers ist es bereits bekannt, am Außendurchmesser des Zugankers zumindest einen Stützring anzubringen und mit einer der Rotorscheiben zu verbinden. Über einen derartigen Stützring kann sich der Zuganker an der entsprechenden Rotorscheibe abstützen. So schlägt beispielsweise die DE 2 643 886 einen Stützring in Form eines Stülprings mit sich aufweitendem Innendurchmesser vor, wobei der Stülpring mit seinem freien Ende größeren Innendurchmessers in eine an der zugeordneten Rotorscheibe vorgesehene Ringnut greift und sich mit dem kleinsten Innendurchmesser an dem Zuganker abstützt. Während des Betriebs wird aufgrund einer Fliehkraftdehnung der Rotorscheibe das mit der Rotorscheibe verbundene Ende des Stülprings derart aufgeweitet, dass der am Außenumfang des Zugankers anliegende Innendurchmesser des Stülprings endseitig gegen den Zuganker drückt, wodurch eine feste Verspannung zwischen der Rotorscheibe und dem Zuganker und damit die gewünschte Stützwirkung erzielt wird.

Um zu verhindern, dass sich ein Stützring axial entlang des Außenumfangs des Zugankers verschieben kann, ist es ferner bekannt, den Stützring durch ein zusätzliches Sicherungselement axial zu sichern. So schlägt die DE 2 643 886 beispielsweise die Verwendung einer Sicherungshülse vor, die zwischen dem Stützring und einer weiteren Rotorscheibe eingesetzt und zusammen mit den Rotorscheiben über den Zuganker verspannt wird. Ist eine weitere Rotorscheibe nicht vorhanden, so muss eine Dummy-Rotorscheibe zum Einsatz kommen, um die Sicherungshülse axial gegen den Stützring drücken zu können. Die Verwendung einer solchen Dummy-Rotorscheibe geht jedoch mit hohen Kosten einher, was nicht wünschenswert ist.

Ausgehend von diesem Stand der Technik ist es eine Aufgabe der vorliegenden Erfindung, einen alternativen Rotor der eingangs genannten Art zu schaffen.

Zur Lösung dieser Aufgabe schafft die vorliegende Erfindung einen Rotor gemäß Anspruch 1. Erfindungsgemäß wird der Stützring in axialer Richtung also einerseits von der Rotorscheibe, mit der er verbunden ist, und andererseits von dem Sicherungselement eingefasst, das an derselben Rotorscheibe befestigt ist. Ein Verspannen des Sicherungselementes gegen den Stützring über den Zuganker ist somit nicht erforderlich. Entsprechend kann der Einsatz einer Dummy-Rotorscheibe entfallen, was zu einem einfachen und preiswerten Aufbau führt.

Das Sicherungselement ist ringförmig ausgebildet. Entsprechend wird der Stützring entlang seines gesamten Umfangs axial gesichert.

Gemäß einer Ausgestaltung der vorliegenden Erfindung weist der Stützring einen sich aufweitenden Innendurchmesser auf, wobei der Stützring mit seinem freien Ende größeren Innendurchmessers in eine an der zugeordneten Rotorscheibe vorgesehene Ringnut greift. Somit kann der erfindungsgemäße Stützring beispielsweise analog zu dem in der DE 26 43 886 offenbarten Stülpring ausgebildet sein.

Vorteilhaft ist das Sicherungselement einteilig ausgebildet, wodurch die Herstellungs- und Montagekosten gesenkt werden können.

Das Sicherungselement ist bevorzugt aus Metall hergestellt.

Das Sicherungselement ist bevorzugt mittels Schrauben an der zugeordneten Rotorscheibe befestigt, die vorteilhaft mit einer Verliersicherung versehen sind. So können die Schrauben beispielsweise verstemmt sein.

Gemäß einer Ausgestaltung der vorliegenden Erfindung ist das Sicherungselement mittels einer Bajonettverbindung an einer zugeordneten Rotorscheibe befestigt. Eine derartige Bajonettverbindung ermöglicht eine einfache Montage und Demontage des Sicherungselementes an der entsprechenden Rotorscheibe. Bevorzugt weist das Sicherungselement entlang seines Umfangs verteilt radial vorstehende Bajonettvorsprünge auf, die in eine an der zugeordneten Rotorscheibe vorgesehene ringförmige Bajonettnut greifen, die mit korrespondierend zu den Bajonettvorsprüngen ausgebildeten Bajonettvorsprungaufnahmeöffnungen versehen ist, die ein axiales Einsetzen der Bajonettvorsprünge in die Bajonettnut ermöglichen. Entsprechend kann die Rotorscheibe einfach axial in die Bajonettnut der Rotorscheibe eingeführt und durch Verdrehen befestigt werden. Vorteilhaft ist das Sicherungselement unter Verwendung zumindest eines Sicherungsstiftes gegen Verdrehen gesichert. Auf diese Weise wird ein versehentliches Lösen der Bajonettverbindung sicher verhindert.

Ferner betrifft die vorliegende Erfindung die Verwendung eines Sicherungselementes zur axialen Sicherung eines Stützrings eines erfindungsgemäßen Rotors.

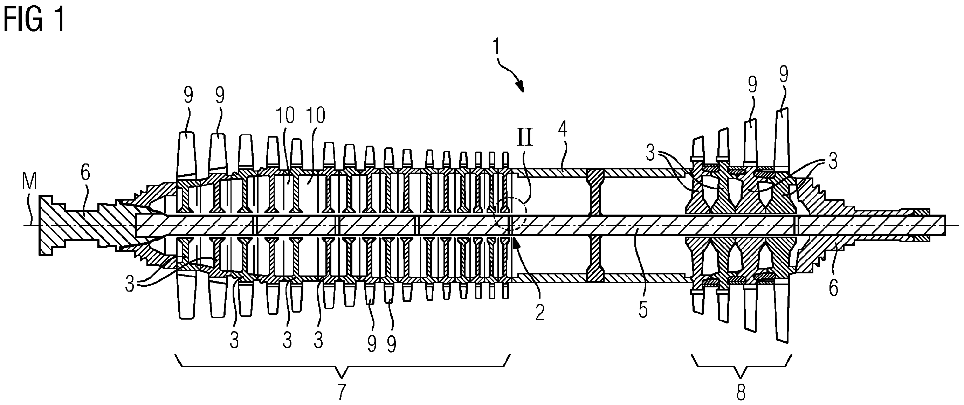

Weitere Merkmale und Vorteile der vorliegenden Erfindung werden anhand der nachfolgenden Beschreibung eines Rotors gemäß einer Ausführungsform der vorliegenden Erfindung unter Bezugnahme auf die beiliegende Zeichnung deutlich. Darin ist
- Figur 1: eine schematische Ansicht eines Rotors gemäß der vorliegenden Erfindung;
- Figur 2: eine vergrößerte Ansicht des in Figur 1 mit dem Bezugszeichen II gekennzeichneten Ausschnitts, die eine Anordnung gemäß einer ersten Ausführungsform der vorliegenden Erfindung zeigt;
- Figur 3: eine perspektivische Ansicht einer Rotorscheibe gemäß einer zweiten Ausführungsform der vorliegenden Erfindung;
- Figur 4: eine perspektivische Ansicht eines Sicherungselements gemäß der zweiten Ausführungsform der vorliegenden Erfindung; und
- Figur 5: eine perspektivisch vergrößerte Ansicht des in Figur 1 mit dem Bezugszeichen II gekennzeichneten Ausschnitts, die eine Anordnung gemäß der zweiten Ausführungsform der vorliegenden Erfindung zeigt.

Der Rotor 1, der vorliegend einen Gasturbinenläufer bildet, umfasst eine Vielzahl von jeweils eine axiale Durchgangsöffnung 2 aufweisenden Rotorscheiben 3, eine Hohlwelle 4 und einen sich durch die Durchgangsöffnungen 2 und die Hohlwelle 3 erstreckenden Zuganker 5, über den die Rotorscheiben 3 und die Hohlwelle 4 in bekannter Weise unter Verwendung endseitig auf den Zuganker 5 aufgeschraubter Spannteile 6 axial verspannt sind. Dabei sind die Rotorscheiben 3 zu einer verdichterseitigen Rotorscheibeneinheit 7 und einer turbinenseitigen Rotorscheibeneinheit 8 zusammengefasst, wobei die Hohlwelle 4 zwischen den beiden Rotorscheibeneinheiten 7 und 8 angeordnet ist. Die zueinander gewandten Stirnflächen unmittelbar benachbart angeordneter Rotorscheiben 3 sind jeweils mit einer nicht näher dargestellten Hirth-Verzahnung versehen, wodurch neben der Verspannung durch den Zuganker 5 auch eine formschlüssige Verbindung zwischen den entsprechenden Rotorscheiben 3 sowie eine Zentrierung bezüglich der Mittelachse M des Rotors 1 erzielt wird. Am Außenumfang der jeweiligen Rotorscheiben 3 sind Laufschaufeln 9 angeordnet. Zwischen den Rotorscheiben 3 vorhandene Ausnehmungen 10 dienen zur Führung eines Kühlmediums zum Kühlen der Rotorscheiben 3, indem Kühlluft über einen zwischen dem Zuganker 5 und den Rotorscheiben 3 bzw. der Hohlwelle 4 gebildeten Kühlkanal zugeführt wird.

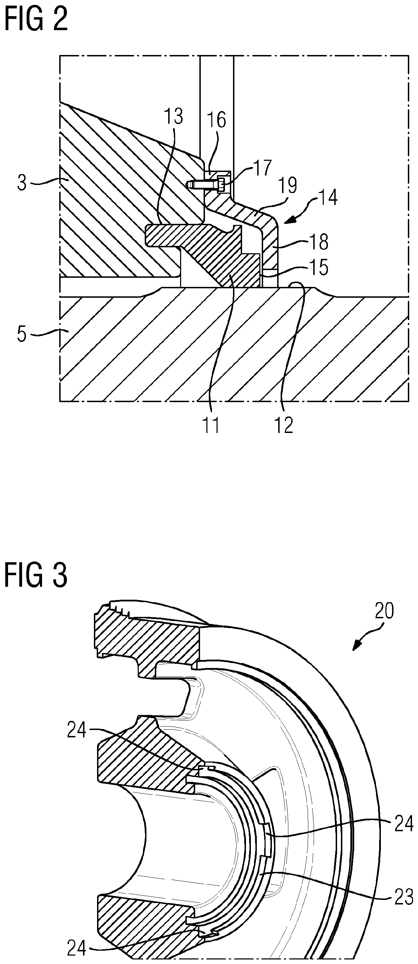

Aufgrund der großen Länge des Zugankers 5 liegen an dessen Außendurchmesser mehrere Stützringe 11 an, die, wie es in Figur 2 dargestellt ist, jeweils mit einer der Rotorscheiben 3 derart in Eingriff sind, dass sich der Zuganker 5 über die Stützringe 11 an den entsprechenden Rotorscheiben 3 abstützt. Jeder der Stützringe 11 ist auf einem Absatz 12 des Zugankers 5 angeordnet und weist einen sich aufweitenden Innendurchmesser auf, wobei jeweils das freie Ende mit dem größeren Innendurchmesser in eine an der benachbart angeordneten Rotorscheibe 3 vorgesehene Ringnut 13 greift. Zur axialen Sicherung der Stützringe 11 sind Sicherungselemente 14 vorgesehen, die jeweils an derjenigen Rotorscheibe 3 befestigt sind, an der auch der zugeordnete Stützring 11 angreift. Die Sicherungselemente 14 sind derart ausgebildet, dass sie eine von der zugeordneten Rotorscheibe 3 weg weisende Stirnfläche 15 des zugeordneten Stützrings 11 umgreifen. Jedes Sicherungselement 14 ist einteilig aus Metall hergestellt und ringförmig ausgebildet. Im Querschnitt betrachtet umfasst jedes Sicherungselement 14 einen an der zugeordneten Rotorscheibe 3 anliegenden Befestigungsschenkel 16, der mittels verliersicher ausgeführten Schrauben 17 an der zugeordneten Rotorscheibe 3 befestigt ist, einen die von der Rotorscheibe 3 weg weisende Stirnfläche 15 des zugeordneten Stützrings 11 umgreifenden Sicherungsschenkel 18 und einen den Befestigungsschenkel 16 und den Sicherungsschenkel 18 miteinander verbindenden Verbindungsschenkel 19.

Während des Betriebs werden aufgrund einer Fliehkraftdehnung derjenigen Rotorscheiben 3, mit denen ein Stützring 11 in Eingriff ist, die jeweils in einer der Ringnuten 13 aufgenommenen freien Enden der Stützringe 11 derart aufgeweitet, dass die am Außenumfang des Zugankers 5 anliegenden Innendurchmesser der Stützringe 11 endseitig gegen den Zuganker 5 drücken, wodurch eine feste Verspannung zwischen den entsprechenden Rotorscheiben 3 und dem Zuganker 5 und damit die gewünschte Stützwirkung erzielt wird. Dabei werden die Stützringe 11 axial durch die zugeordneten Sicherungselemente 14 gesichert.

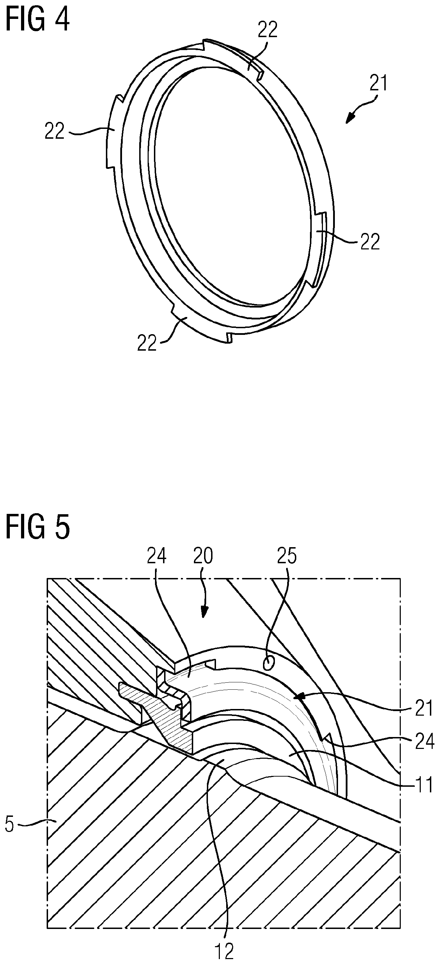

Die Figuren 3 bis 5 zeigen eine alternative Ausgestaltung einer Rotorscheibe 20 und eines Sicherungselementes 21 einer Anordnung gemäß einer zweiten Ausführungsform der vorliegenden Erfindung, die anstelle der in Figur 2 dargestellten Anordnung verwendet werden kann. Bei der in Figur 5 dargestellten Anordnung ist der Stützring 11 axial durch das Sicherungselement 21 gesichert, das wiederum mittels einer Bajonettverbindung an der Rotorscheibe 20 befestigt ist. Zur Realisierung der Bajonettverbindung weist das Sicherungselement 21, das im Übrigen analog zum Sicherungselement 14 der ersten Ausführungsform ausgebildet ist, entlang seines Umfangs verteilt radial vorstehende Bajonettvorsprünge 22 auf, die in eine an der zugeordneten Rotorscheibe 20 vorgesehene ringförmige Bajonettnut 23 greifen, die mit korrespondierend zu den Bajonettvorsprüngen 22 ausgebildeten Bajonettvorsprungaufnahmeöffnungen 24 versehen ist, die ein axiales Einsetzen der Bajonettvorsprünge 22 in die Bajonettnut 23 ermöglichen. Entsprechend kann das Sicherungselement 21 axial über den Stützring 11 geschoben werden, wobei die Bajonettvorsprünge 22 in die zugehörigen Bajonettvorsprungaufnahmeöffnungen 24 eingeführt werden, woraufhin die Bajonettvorsprünge 22 durch Verdrehen des Sicherungselementes 21 axial fixiert werden. Eine radiale Sicherung gegen Verdrehen ist vorliegend durch einen Sicherungsstift 25 realisiert, der in eine sich in axialer Richtung erstreckende Bohrung der Rotorscheibe 20 eingesetzt und in dieser verpresst ist.

Ein wesentlicher Vorteil der erfindungsgemäßen Sicherungselemente 14, 21 besteht darin, dass diese nicht über den Zuganker 5 gegen die zugehörigen Stützringe 11 verspannt werden, weshalb sich diese unabhängig von ihrer Position einfach und preiswert montieren lassen. Auch ein Nachrüsten ist ohne großen Aufwand möglich. Aufgrund ihres einfachen Aufbaus können die Sicherungselemente 14, 21 zudem kostengünstig gefertigt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

## Patentansprüche

1. Rotor (1), insbesondere Gasturbinenläufer, mit mehreren jeweils eine axiale Durchgangsöffnung (2) aufweisenden Rotorscheiben (3, 20), welche (3,20) über zumindest einen sich durch die Durchgangsöffnungen (2) erstreckenden Zuganker (5) axial verspannt und zu zumindest einer Rotorscheibeneinheit (7, 8) zusammengefasst sind,
wobei am Außendurchmesser des Zugankers (5) zumindest ein Stützring (11) anliegt, welcher (11) mit einer zugeordneten Rotorscheiben (3) in Eingriff ist und über den sich der Zuganker (5) an der zugeordneten Rotorscheibe (3, 20) abstützt, und
wobei zur axialen Sicherung des zumindest einen Stützrings (11) wenigstens ein Sicherungselement (14, 21) vorgesehen ist, welches (14, 21) ringförmig ausgebildet ist, **dadurch gekennzeichnet, dass** das Sicherungselement (14, 21) im Querschnitt betrachtet einen an der zugeordneten Rotorscheibe (3) anliegend befestigten Befestigungsschenkel (16) und einen eine von der Rotorscheibe (3, 20) weg weisende Stirnfläche (15) des Stützrings (11) umgreifenden Sicherungsschenkel (18) und einen den Befestigungsschenkel (16) und den Sicherungsschenkel (18) miteinander verbindenden Verbindungsschenkel (19) aufweist.

2. Rotor (1) nach Anspruch 1,
**dadurch gekennzeichnet,**
**dass** der Stützring (11) einen sich aufweitenden Innendurchmesser aufweist und mit seinem freien Ende größeren Innendurchmessers in eine an der zugeordneten Rotorscheibe (3, 20) vorgesehene Ringnut (13) greift.

3. Rotor (1) nach Anspruch 1 oder 2,
**dadurch gekennzeichnet,**
**dass** das Sicherungselement (14, 21) einteilig ausgebildet ist.

4. Rotor (1) nach einem der Ansprüche 1 bis 3,
**dadurch gekennzeichnet,**
**dass** das Sicherungselement (14, 21) aus Metall hergestellt ist.

5. Rotor (1) nach einem der Ansprüche 1 bis 4,
**dadurch gekennzeichnet,**
**dass** das Sicherungselement (14) mittels Schrauben (17) an der zugeordneten Rotorscheibe (3) befestigt ist.

6. Rotor (1) nach Anspruch 5,
**dadurch gekennzeichnet,**
**dass** die Schrauben (17) mit einer Verliersicherung versehen sind.

7. Rotor (1) nach einem der Ansprüche 1 bis 4,
**dadurch gekennzeichnet,**
**dass** das Sicherungselement (21) mittels einer Bajonettverbindung an der zugeordneten Rotorscheibe (20) befestigt ist.

8. Rotor (1) nach Anspruch 7,
**dadurch gekennzeichnet,**
**dass** das Sicherungselement (21) entlang seines Umfangs verteilt radial vorstehende Bajonettvorsprünge aufweist, die in eine an der zugeordneten Rotorscheibe (20) vorgesehene ringförmige Bajonettnut (23) greifen, die mit korrespondierend zu den Bajonettvorsprüngen (22) ausgebildeten Bajonettvorsprungaufnahmeöffnungen (24) versehen ist, die ein axiales Einsetzen der Bajonettvorsprünge (22) in die Bajonettnut (23) ermöglichen.

9. Rotor (1) nach Anspruch 7 oder 8,
**dadurch gekennzeichnet,**
**dass** das Sicherungselement (21) unter Verwendung zumindest eines Sicherungsstiftes (25) gegen Verdrehen gesichert ist.

10. Verwendung eines Sicherungselementes (14) zur axialen Sicherung eines Stützrings (11) eines Rotors (1) nach einem der vorhergehenden Ansprüche.

## Claims

1. Rotor (1), in particular gas turbine rotor, having a plurality of rotor disks (3, 20) which each have an axial through-opening (2) and which (3, 20) are axially tensioned by means of at least one tension rod (5) which extends through the through-openings (2) and which are combined to form at least one rotor disk unit (7, 8),
wherein there abuts on the outer diameter of the tension rod (5) at least one support ring (11) which (11) is in engagement with an associated rotor disk (3) and via which the tension rod (5) is supported on the associated rotor disk (3, 20), and wherein at least one securing element (14, 21) is provided for axially securing the at least one support ring (11), which (14, 21) is constructed in an annular manner, **characterized in that** the securing element (14, 21) when viewed in cross-section has a fixing member (16) which is adjoiningly fixed to the associated rotor disk (3) and a securing member (18) which engages round an end face (15) of the support ring (11), which face is directed away from the rotor disk (3, 20), and a connection member (19) which connects the fixing member (16) and the securing member (18) to each other.

2. Rotor (1) according to Claim 1,
**characterized**
**in that** the support ring (11) has an expanding inner diameter and engages with the free end thereof having a greater inner diameter in an annular groove (13) which is provided in the associated rotor disk (3, 20).

3. Rotor (1) according to Claim 1 or 2,
**characterized**
**in that** the securing element (14, 21) is constructed in one piece.

4. Rotor (1) according to one of Claims 1 to 3,
**characterized**
**in that** the securing element (14, 21) is produced from metal.

5. Rotor (1) according to one of Claims 1 to 4,
**characterized**
**in that** the securing element (14) is fixed to the associated rotor disk (3) by means of screws (17).

6. Rotor (1) according to Claim 5,
**characterized**
**in that** the screws (17) are provided with a loss prevention means.

7. Rotor (1) according to one of Claims 1 to 4,
**characterized**
**in that** the securing element (21) is fixed to the associated rotor disk (20) by means of a bayonet connection.

8. Rotor (1) according to Claim 7,
**characterized**
**in that** the securing element (21) has in a state distributed over the periphery thereof radially projecting bayonet projections which engage in an annular bayonet groove (23) which is provided in the associated rotor disk (20) and which is provided with bayonet projection receiving openings (24) which are formed so as to correspond to the bayonet projections (22) and which allow axial insertion of the bayonet projections (22) into the bayonet groove (23).

9. Rotor (1) according to Claim 7 or 8,
**characterized**
**in that** the securing element (21) is secured against rotation using at least one securing pin (25).

10. Use of a securing element (14) for axially securing a support ring (11) of a rotor (1) according to one of the preceding claims.

## Revendications

1. Rotor (1), notamment roue de turbine à gaz, comprenant plusieurs disques (3, 20) rotoriques, ayant chacun une ouverture (2) axiale de passage, qui (3, 20) sont serrés axialement par au moins un tirant (5) passant dans les ouvertures (2) de passage et rassemblés en au moins une unité (7, 8) de disque rotorique,
dans lequel, au diamètre extérieur du tirant (5), s'applique au moins une bague (11) d'appui, qui est en prise avec un disque (3) rotorique associé et par laquelle le tirant (5) s'appuie sur le disque (3, 20) rotorique associé et
dans lequel il est prévu, pour l'assujettissement axial de la au moins une bague (11) d'appui, au moins un élément (14, 21) d'assujettissement,
qui (14, 21) est constitué annulairement, **caractérisé en ce que** l'élément (14, 21) d'assujettissement a, considéré en section transversale, une branche (16) de fixation fixée en s'y appliquant au disque (3) rotorique associé et une branche (18) d'assujettissement, embrassant une surface (15) frontale, éloignée du disque (3, 20) rotorique, de la bague (11) d'appui et une branche (19) de liaison reliant entre elles la branche (16) de fixation et la branche (18) d'assujettissement.

2. Rotor suivant la revendication 1,
**caractérisé en ce que**
la bague (11) d'appui a un diamètre intérieur s'élargissant et pénètre, par son extrémité libre de diamètre intérieur plus grand, dans une rainure (13) annulaire prévue sur le disque (3, 20) rotorique associé.

3. Rotor suivant la revendication 1 ou 2,
**caractérisé en ce que**
l'élément (14, 21) d'assujettissement est constitué d'une seule pièce.

4. Rotor suivant l'une des revendications 1 à 3,
**caractérisé en ce que**
l'élément (14, 21) d'assujettissement est en métal.

5. Rotor suivant l'une des revendications 1 à 4,
**caractérisé en ce que**
l'élément (14) d'assujettissement est fixé au disque (3) rotorique associé au moyen de vis (17).

6. Rotor suivant la revendication 5,
**caractérisé en ce que**
les vis (17) sont pourvues d'une sécurité empêchant de les perdre.

7. Rotor suivant l'une des revendications 1 à 4,
**caractérisé en ce que**
l'élément (21) d'assujettissement est fixé au disque (20) rotorique associé au moyen d'une liaison à baïonnette.

8. Rotor suivant la revendication 7,
**caractérisé en ce que**
l'élément (21) d'assujettissement a, répartis le long de son pourtour, des ergots de baïonnette, qui font saillie radialement et qui pénètrent dans une rainure (23) de baïonnette annulaire prévue sur le disque (20) rotorique associé, rainure qui est pourvue d'ouvertures (24) de réception d'ergots de baïonnette constituées de manière correspondante aux ergots (22) de baïonnette, ouvertures qui permettent une insertion axiale des ergots (22) de baïonnette dans la rainure (23) de baïonnette.

9. Rotor suivant la revendication 7 ou 8,
**caractérisé en ce que**
l'élément (21) d'assujettissement est sécurisé à la torsion en utilisant au moins une broche (25) de sécurisation.

10. Utilisation d'un élément (14) d'assujettissement pour l'assujettissement axial d'une bague (11) d'appui d'un rotor (1) suivant l'une des revendications précédentes.
